# EUROPEAN PATENT APPLICATION

(11) **EP 1 903 782 A2**
(43) Date of publication of application: **26.03.2008**
(21) Application number: 07018295.1
(22) Date of filing: 18.09.2007
(51) Int. Cl.: H04N 5/232

(54) **Control system of image photographing apparatus, as digital camera, digital video-camera or the like using a mobile communication terminal, and image photographing apparatus, as digital camera, digital video camera or the like used in the system, control method and control program**

(30) Priority: 20.09.2006 JP 2006254433
(71) Applicant: MACNICA, INC., Yokohama-shi Kanagawa 222-8561 (JP)
(72) Inventor: Masao, Ogawa, Kanagawa 222-8561 (JP)
(74) Representative: Möbus, Steffen

(57) **Abstract**

The mobile communication terminal 1 and the image photographing apparatus 2 are connected through wireless communications or optical communications,where the image data from the image photographing apparatus 2 is displayed in the mobile communication terminal 1 on a real-time basis, where various functions such as ON function,OFF function,a connection ON function, a connection OFF function,a recording start function,a recording stop function,a shuttering function,a flash function,a zooming function, an image size changing function, a monitoring function (a monitoring start function and a monitoring stop function), and an angle changing function and so forth of the image photographing apparatus 2 connect OFF function are controled.

## Description

Control system of image photographing apparatus, as digital camera, digital video camera or the like using a mobile communication terminal, and image photographing apparatus, as digital camera, digital video camera or the like used in the system, control method, and control program.

### [Background of the invention]

### [Field of the Invention]

This invention relates to a control system of image photographing apparatus, as digital camera, digital video camera or the like, using a mobile communication terminal, an image photographing apparatus, as digital camera, digital video camera or the like used in the system, the control method, and the control program.

### [Description of the Related Art]

Formerly, when the user sets the image photographing apparatus, as digital camera, digital video camera or the like (hereinafter shortened to the image photographing apparatus) at the designated place, and takes photographs of the user or the like of the image photographing apparatus as photographic subject in still image or dynamic image, such method was adopted that by using wireless remote control and opereted the image photographing apparatus by remote control.
As these conventional technology, the patent documents 1 mentiond below is disclosed. The "VTR combination camera provided with wireless remote control" described in the patent documents 1 consists of the constitution that has transmitting part for transmitting the image signal to wireless remote control in the VTR combination camera, that has receiving part for receiving image signal transmitted from the transmitting part and image displaying part for displaying the image signal in the wireless remote control, so that the photographer in case of photographing at a distance from the VTR combination camera can confirm visually the photographing image by wireless remote control, and can adjust the view angle of the subject.
[patent documents 1]
Japanese Unexamined Patent Application PublicationNo.7-038797

However, since the wireless remote control of the above mentioned patent documents 1 was exclusive remote control for the VTR combination camera, it had problems of (1) - (4).
(1) Since exclusive remote control is attached, purchse cost becomes comparatively high-priced.
(2) In the beginning of use, it takes time and effort for the learning the operation method of the exclusive remote control.
(3) During the use period, it is not easy to carry the exclusive remote control in addition to the VTR combination camera.
(4) Moreover, if remote control is fogotten, remote operation becomes immposible when photographing.

### [Summary of the Invention]

The present invention was made in view of the problems, and its purpose is to provide the control system of the image photographing apparatus using the mobile communication terminal, as a cellular phone, PDA (Personal Digital Assistants), a smart phone, or a mobile game player or the like(hereinafter shortened to the mobile communication terminal) which enables to solve the problems, the image photographing apparatus used in the system, the control method, and the control program.

In order to solve the above-mentioned problems, a control system of the image photographing apparatus according to the invention of claim 1 is the control system wherein the mobile communication terminal is connected with the image photographing apparatus through wireless communications or optical communications, the various functions of the image apparatus is controlled on the basis of the control instructing data regarding the operation of the mobile communication terminal.
This constitution enables the user of the image photographing apparatus to divert the mobile communication terminal,which he always carry with him at his side, as the remote control of the image photographing apparatus.

Also, the invention according to claim 2 relates to the control system of the image photographing apparatus using the mobile communication terminal according to claim 1, and the mobile communication terminal has displaying part and is wherein the image data of the photographic suject displayed in the finder of the image photographing apparatus is displayed in the displaying part.
This enables the user, at the time of photographing, to display the photographic subject at the display part of the mobile communication terminal, to confirm the constitution, and to control the function of the image photographing apparatus from the mobile communication terminal by remote operation.

And, the invention according to claim 3 relates to the control system of the image photographing apparatus using the mobile communication terminal according to claim 1 or 2, and is wherein the software of the mobile communication terminal for the control of the various finctions can be installed through the Internet. This enables the user to divert the latest software to the mobile communication terminal, and for the user who already utilizes the mobile communication terminal as remote control , to use immediately the improved function by installing to his mobile communication terminal, when the function as remote control for the image photographing apparatus is improved and up-graded.

Also, the invention according to claim 4 relates to the control system of the image photographing apparatus using the mobile communication terminal according to claim 3, and is wherein the installation can be removed with the software previously equipped regarding the operation method of the camera in the mobile communication terminal.
This makes the user unnecessary of learning the method regarding the conventional camera operation method of the mobile communication terminal, and enables the user easily to be familiar with the operation of the the mobile communication terminal as remote control.

Also, the invention according to claim 5 relates to the control system of the image photographing apparatus using the mobile communication terminal according to any one of claim 1 through 4, and is the the control system wherein the various function (s) has/have more than one of any functions among shuttering function, zooming function, picture size changing function, and monitoring function.
This enables the user to confirm the photographic subject by displaying it in the display part of the mobile communication terminal when photographing, and to operate easily the zooming-in/zooming-out to the photographic subject or the image data cofirmation of the image size change from vertically oriented to long sideways regarding the photographed image data from the mobile communication terminal by remote control.

Also, the invention according to claim 6 relates to the control system of the image photographing apparatus using the mobile communication terminal according to any one of claim 1 through 5, and is wherein the various function(s) has/have angle changing function regarding the image photographing apparatus.
This makes the user unnecessary of approching the setting place often when photographing, and enables the angle changing of the photographic subject, confirming the photographic subject in the display part of the mobile communication terminal, from the mobile communication terminal by remote control.

Also,the image photographing apparatus according to the invention of claim 7 is wherein it is connected with the mobile communication terminal through wireless communications or optical communications and various functions are controlled on the basis of controll instructing data regarding the operation of the mobile communication terminal.

Also, the invention according to claim 8 relates to the image photographing apparatus according to claim 7, and is wherein the mobile communication terminal has display part and displays in the display part the image data of the photographic subject displayed in the finder.

Also, the invention according to claim 9 relates to the image photographing apparatus according to claim 7 or 8 , and is wherein the various functions has/have more than one of any functions among shuttering function, zooming function, picture size changing function, and monitoring function.

Also, the invention according to claim 10 relates to the image photographing apparatus according to any one of the claim 7 through 9, and is wherein the various functions has/have angle changing function.

Also, the control system according to the invention of claim 11 is the control system of controlling the various functions of the image photographing apparatus on the basis of the control instructing data regarding the operation of the mobile communication terminal connected through wireless communications or optical communications , and is wherein it has display step which displays in the display part of the mobile communication terminal the image data of photographic subject from the image photographing apparatus, has making and transmitting step which makes the control instructing data and transmits to the image photographing apparatus, has receiving and control step which receives the control instructing data transmitted from the making and transmitting step, and controls the various functions on the basis of the control instructing data, and has display step after control which displays in the display part the image data immediately after control at the receiving and control step.

Also, the invention according to claim 12 relates to the control method according to claim 11, and is wherein the control instructing data has more than one of any functions among shuttering function, zooming function, image size changing function, monitoring function, and angle changing function.

Also, the invention according to claim 13 relates to the control program wherein the control method according to claim 11 or 12 is performed by computer.

According to the present invention, the user of the image photographing apparatus can obtain the effect of the following(1)~(3)
(1) The mobile communication terminal carried always with side can be diverted as remote control without replacing it at the time of purchase.
(2) In the beginning of use,it is unnecessary to learn the operation method regarding the operation method with conventional camera of the mobile communication terminal, and can be familiar with the operation of the mobile communication terminal as remote control.
(3) Even during the available period, the user can display the photographic subject in the display part of the mobile communication terminal when photographing, confirming the constitution, and control the function of the image photographing apparatus from the mobile communication terminal by remote control.

### [Detailed Description of the Invention]

With reference to drawings, the embodiment of the present invention is described as follows,

### First embodiment

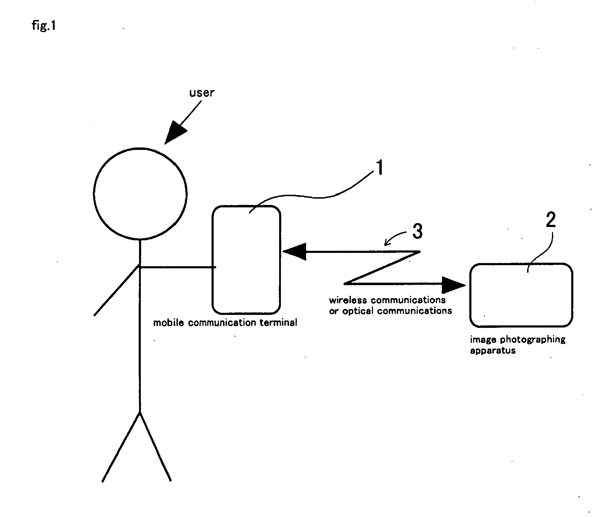

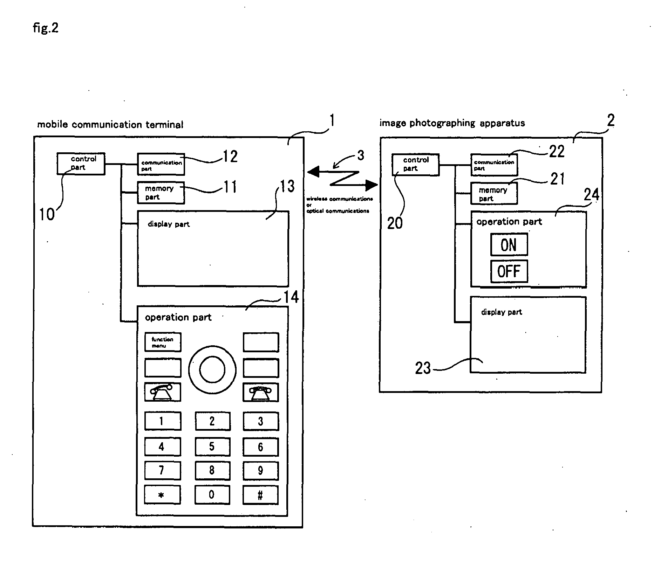

In Fig.1 and Fig.2, the control system of the image photographing apparatus using the mobile communication terminal of this example consists of the mobile communication terminal 1 and the image photographing apparatus 2 connected through wireless communications 3 or optical communications 3.

The mobile communication terminal 1 consists of each composition part, such as control part 10, memory part 11, communication part 12, display part 13, and operation part 14.
The control part 10 consists of CPU (central processing unit) and so forth, performs the communication control program or other various processing programs memorized at the memory part 11,and controls the each composition part of the mobile communication terminal 1.

The memory part 11 consists of memory, such as semiconductor memory like ROM or RAM and HDD, where various operation program is memorized, and various resister and flag are ensured, which is used in execution of program by control part 10.
As the various processing program, the processing programs of the control instructing data making&transmitting program,the image data receiving&displaying program are memorized.
When the user of the image photographing apparatus 2 diverts the mobile communication terminal 1 in hand, each camera maker side offers the processing program by the operation method according to the conventional operation method, regarding the processing program of outside camera built in the control instructing data transmitting program or itself among these processing programs.
The user side accesses the homepage offered by the camera maker side, installs the appropriate proccessing program for the model of the mobile communication terminal 1 and the proccessing program is memorized to the memory part 11. In this way, the specifications regarding the camera operation method of the image photographing apparatus 2 succeed to the specifications of the conventional mobile communication terminal,and the user can become familiar with it.

The control instructing data making&transmitting program is the program, which makes the control instructing data for the control of various functions of the image photographing apparatus 2, and transmits the control instructing data made to the image photographing apparatus 2.
There are classified informations which the image photographing apparatus 2 prepares for various functions, and the informations of supplementary data for the execution by the function classified to these functions.
Also, these classified functions are ON function,OFF function, a connection ON function, a connection OFF function, a recording start function,a recording stop function,a shuttering function, a flash function, a zooming function, an image size changing function, a monitoring function(a monitoring start function and a monitoring stop function), and an angle changing function. The supplementary data is added in case of the execution of the function as the zooming function, the image size changing function.

The image data receiving & displaying program is the program, which receives the image data from the image photographing apparatus 2 on a real-time basis, and displays the image data received in the display part 13 of the mobile communication terminal 1.

The communication part 12 communicates mutually by the use of wireless communications technology as Bluetooth(a registered trademark), IEEE802.11a, 11b, 11g or the like in case of radio wave, and by the use of communications technology, which uses light-emitting device of transforming electric signal to light signal as infrared rays and light receiving element of transforming light signal to electric signal in case of light.

The display part 13 is the display apparatus of LCD(Liqid Crystal Display), which displays the image data from the image photographing apparatus 2.

The operating part 14 is the user's interface with the the image photographing apparatus 2, which displays the various functions in the display part 13 by pushing down the function menu button or the touch panel button, and when the button arranged in the operation part 14 corresponding to various functions is pushed down, it controls the function of the image photographing apparatus 2 corresponding to each buttons. Moreover, when a plurality of subordinate detailed functions is further included in a selected functional classification, the sub-functions menu about the selected functional classification is displayed after choosing any functional classification among the functional menu,and it is divided by class so that the user may be prompted to choose any sub-functions.

As for the function menu regarding the camera, there are still image mode and dynamic image mode by the built-in camera in the conventional mobile communication terminal and the still image mode and dynamic image mode by the image photographing apparatus 2, in the case of still image mode of the image photographing apparatus 2, various functions of the mobile communication terminal 1 are explained as follows, which are displayed in the display part 13 when the function menu button arranged at the operation part 14 of the mobile communication terminal 1 is pushed down.

First the user of the control system turns on the power to each communication part of the mobile communication terminal 1 and the image photographing apparatus 2. And after finishing the use of the control system the user turns off the power to each communication part of the mobile communication terminal 1 and the image photographing apparatus 2 at the very end.
The ON function turns on the power supply of the communication part 22 of the image photographing apparatus 2,and enables wireless communications function or optical communications function.
The OFF function turns off the power supply of the communication part 22 of the image photographing apparatus 2.
The connection ON function makes wireless communications or optical communications established between the mobile communication terminal 1 and the image photographing apparatus 2, and displays the image data in the display part from the connected image photographing apparatus 2.
The connection OFF function releases the connection with the image photographing apparatus 2.
The recording start function starts recording the image data displayed in the display part 13 from the image photographing apparatus 2 to the memory part 11 as dynamic image.
The recording stop function stops the recording of the image data to the memory part 11 started by the recording start function.
The shuttering function records the image data as still image at the memory part 11.
The flash function is linked together with the shuttering function, and flashes.

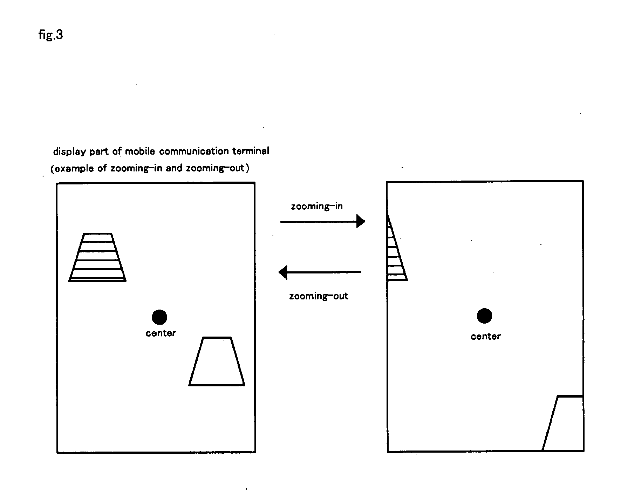

As zooming function, there is optical zooming and digital zooming, in this example the change of telescopic angle or wide angle is performed using the optical zooming, and the image size data set the horizontal and vertical size(the number of pixels) of the plural kinds predetermined is memorized in the memory part 11, and among these the image size desired is so selected as to adust the purpose of the user.When the user utilizes the zooming function,the user selects telephotographic (zooming in) or wide angle (zooming-out), chooses the image size recorded at the image size table data as ascending order (zooming-in) or descending order (zooming-out), and performs the overall zooming-in/zooming out of the image data (see Fig.3). Here, the image data of zooming-in and zooming- out comprises both the image data of the suject now photographing and the the suject already photographed. Also, as the supplementary data, the image size selected by the sub-function menu is set.

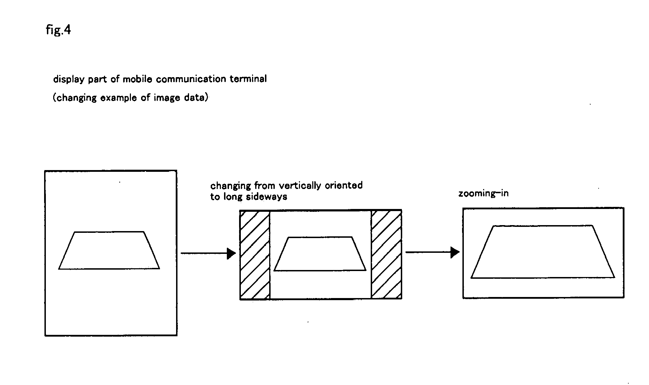

In the image size changing function, when photographing the image size is determined depending the utilization form of the display part 13 vertically oriented or long sideways, and is performed after photographing when desired or the like, the image size of the image data from vertically oriented to long sideways or long sideways to vertically oriented.Fig.4 shows an example, where the image size is changed from vertically oriented to long sideways, and at the same time the whole image data is zoomed in.
As the supplementary data, the image size is set in case of the change from vertically oriented to long sideways and zooming-in.

The monitoring function is convenient although rough by recording the image data in reduction (thumbnail) and displaying as a whole at the time of displaying, where the user finished photographing and in case of desire to confirm these image data as soon as possible, as it is laborious to confirm the image data in each order. Also as the monitoring function, it contains the function of stopping the thumbnail display to the display part 13 started by the monitoring function, and displaying the original image data against the thumbnail where the display is stopped.

Next, the image photographing apparatus 2 consists of control part 20, memory part 21, communication part 22, display part 23, operation part 24, and so forth.
The control part 20 consists of the CPU (the central processing unit) and so forth, and performs the various processing program memorized in the communication control program or memory part 21.

The memory part 21 consists of the memory of semiconductor memory such as ROM or RAM and HDD, where various processing program performed by the control part 20 or various data is memorized, and the various resister by which the control part 20 performs the program and flag are secured.
As the various data, the image data obtained by the image photographing apparatus 2 is recorded. The image size recorded at the memory part 21 of this image data, as explained at the various zooming functions of the image photographing apparatus 2,is recorded with the image size selected by the user when photographing.

As the various processing program, the processing program like the control instructing data receiving program, the image data transmitting program, or the like are memorized.
The control instructing data receiving program is the program, which receives the control instructing data for the control of various functions of the image photographing apparatus 2 from the mobile communication terminal 1.
The control instructing data comprises the similar contents of the above-mentioned control instructing data making&transmitting program.

The image data transmitting program transmits the image data photographed by the image photographing apparatus 2 to the mobile communication terminal 1 on a real-time basis.
The various each composition of the communication part 22, the display part 23, the operating part 24 or the like are omitted on the whole as similar as the mobile communication terminal 1.

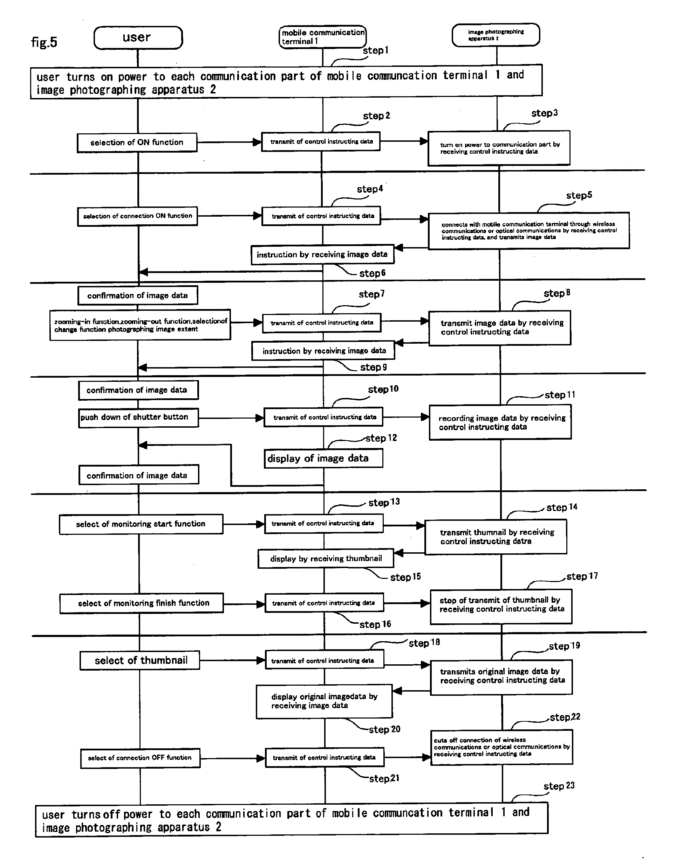

Next,the functioning of the control system of the image photographing apparatus using the mobile communication terminal is explained, as refered to the flowchart shown in Fig.5.
First the user of the control system tuns on the power to each communication part of the mobile communication terminal 1 and the image photographing apparatus 2 (the step 1 in Fig. 5: power turning on step).
Then, when the user selects the ON function from the mobile communication terminal 1, the mobile communication terminal 1 makes the control instructing data on the basis of the selected function(turning on the power of the communication part 22) and transmits it to the image photographing apparatus 2(the step 1 in Fig.5: making & transmitting step).
The image photographing apparatus 2, which received the control instructing data from the mobile communincation terminal 1, turns on the power of the communication part 22, and performs the connection of wireless communications or optical communications with the mobile communincation terminal 1 (the step 2 in Fig.5: receiving & control step).

Then, when the user selects the the connection ON function of the mobile communincation terminal 1, the mobile communincation terminal 1 makes the control instructing data on the basis of the selected function (wireless communications or optical communications between the mobile communincation terminal 1 and the image photographing apparatus 2), and transmits it to the image photographing apparatus 2 (the step 4 in Fig.5: making & transmitting step).
The image photographing apparatus 2 which received the control instructing data from the mobile communincation terminal 1,connects the mobile communincation terminal 1 through wireless communications or optical communications, since that time the control of the various functions of the image photographing apparatus 2 from the mobile communincation terminal 1 becomes efficient, then transmits the image data obtained by the image photographing apparatus 2 to the mobile communincation terminal 1(the step 5 in Fig.5: receiving & control step).
The mobile communincation terminal 1, which received the image data from the image photographing apparatus 2, displays the image data in the display part 13 (the step 6 in Fig. 5: display step).

And then, when the user selects the zooming function or the image size changing function or the angle changing function of the mobile communincation terminal 1 confirming the image data from the image photographing apparatus 2 displayed in the display part 13 of the mobile communincation terminal 1,the mobile communincation terminal 1 transmits the control instructing data on the basis of the function selected by the user to the image photographing apparatus 2 (the step 7 in Fig. 5: making & transmitting step).
When the user selects the zooming function, the mobile communincation terminal 1 sets the zooming function according to various functions, and sets the image size with the supplementary data. When the user selects the image size changing function, the mobile communincation terminal 1 sets the image size changing function according to function kinds,and sets the image size after changed with the supplementary data. The image photographing apparatus 2, which received the control instructing data from the mobile communincation terminal 1, controls the changing of the image size of the image data on the basis of the control instructing data according to the control kinds and the supplementary data(receiving & control step), and immediately after the control transmits the image data to the mobile communincation terminal 1 on a real-time basis(the step 8 in Fig.5).
The mobile communincation terminal 1, which received the image data from the image photographing apparatus 2 on a real-time basis, displays the image data in the display part 13 (the step 9 in Fig.5: display step after control).
Here, the above-mentioned image data comprises both the image data of the suject now photographing and the the suject already photographed.

Next, when the user confirms the image data from the image photographing apparatus 2 displayed in the display part 13 of the mobile communincation terminal 1 and selects the shuttering function of the mobile communincation terminal 1, the mobile communincation terminal 1 makes the control instructing data( the record of the image data), and transmits it to the image photographing apparatus 2(the step 10 in Fig.5: making & transmitting step).
The image photographing apparatus 2, which received the control instructing data from the mobile communincation terminal 1, memorizes the image data obtained in the memory part 21 of the image photographing apparatus 2(the step 11 in Fig.5: receiving & control step).
After photographing, the user confirms the image data recorded in the memory part 21 of the image photographing apparatus 2 by displaying it in the display part 13 of the mobile communincation terminal 1 (the step 12 in Fig.5).
The way as to the confirmation of the image data by the user after photographing may be also the way as follows(step 13 ~18).

When the user selects the monitoring start function of the mobile communincation terminal 1, the mobile communincation terminal 1 makes the control instructing data(the display of the thumbnail starts) on the basis of the function selected by the user, and transmits it to the image photographing apparatus 2(the step 13 in Fig.5: making & transmitting step).
The image photographing apparatus 2, which received the control instructing data from the mobile communincation terminal 1, transmits the thumbnail in order recorded beforehand in reduction concerning the image data (the step 14 in Fig.5: receiving & control step).
The mobile communincation terminal 1, which received the thumbnail from the image photographing apparatus 2,displays the thumbnail successively as the slide show or the like(the step 15 in Fig.5: display step).
Next, when the user confirms the thumbnail from the image photographing apparatus 2 displayed in the display part 13 of the mobile communincation terminal 1, and selects the monitoring stop function of the mobile communincation terminal 1, the mobile communincation terminal 1 makes the control instructing data (the display stop of the thumbnail) on the basis of the function selected by the user, and transmits it to the image photographing apparatus 2 (the step 16 in Fig.5: making & transmitting step).
The image photographing apparatus 2, which received the control instructing data from the mobile communincation terminal 1,stops transmitting of the thumbnail (the step 17 in Fig.5: receiving & control step).

Next, when the user selects any thumbnail from the image photographing apparatus 2 displayed in the display part 13 of the mobile communincation terminal 1, the mobile communincation terminal 1 makes the control instructing data(the display of the original image data)according to the thumbnail selected by the user, and transmits it to the image photographing apparatus 2(the step 18 in Fig.5: making & transmitting step).
The image photographing apparatus 2, which received the control instructing data from the mobile communincation terminal 1, transmits the original image data according to the thumbnail selected by the user to the mobile communincation terminal 1 (the step 19 in Fig.5: receiving & control step).
The mobile communincation terminal 1, which received the image data from the image photographing apparatus 2, displays the the image data in the display part (the step 20 in Fig.5: display step).
After the photographing by the remote control with the image photographing apparatus 2, when the user selects the connection OFF function of the mobile communincation terminal 1, the mobile communincation terminal 1 makes the control instructing data on the basis of the function selected by the user (the release of the connection between the mobile communincation terminal 1 and the image photographing apparatus 2) and transmits it to the image photographing apparatus 2 (the step 21 in Fig. 5: making & transmitting step).
The image photographing apparatus 2, which received the control instructing data from the mobile communincation terminal 1, stops the connection of the wireless communications or the optical communications between the mobile communincation terminal 1(the step 22 in Fig.5: receiving & control step). At the very end the user of the control systems turns off the power to each communication part of the mobile communication terminal 1 and the image photographing apparatus 2 (the step 23 in Fig.5: power turning off step).

Thus, accrording to the first embodiment of the invention, the user of the image photographing apparatus 2 can obtain the effect of the following (1)~(5)
(1) On starting the use of the mobile communincation terminal 1 as remote control, the mobile communincation terminal 1 is diverted as the remote control of the image photographing apparatus 2, so that the user can use it at minimum cost.
(2) Also,concernig the operation aspect of the various functions as remote control, the user can operate it by almost the same operation method of the outside camera equipped inside it,and becomes easily familiar with it.
(3) During the available period, the user carrys always in his side,and never forgets it at the time of photographing.
(4) Also, at the time of photographing, the user can confirm the photographic subject in the display part 13 of the mobile communincation terminal 1, and control the various functions of the image photographing apparatus 2 (shuttering function, zooming function, image size changing function,monitoring function, angle changing function and so on) from the mobile communincation terminal 1 by remote control.
(5) And also, when the software of the various functions as remote control is improved and up-graded, the improved functions can be installed into the mobile communincation terminal 1 through the Internet, and utilized immediately.

### Second embodiment

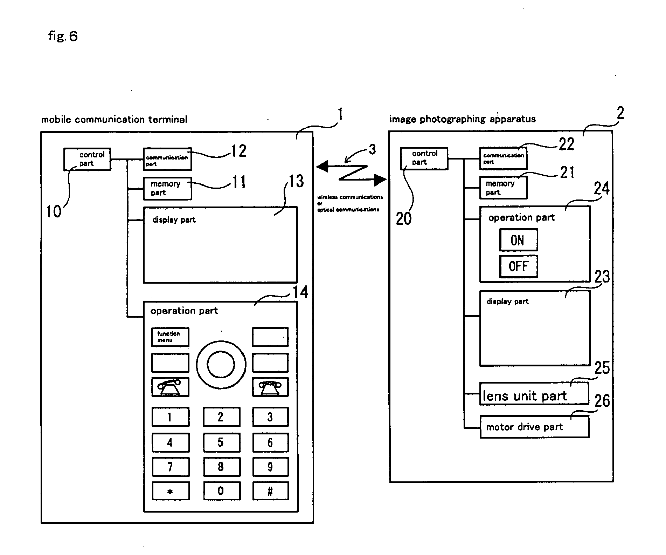

Concerning the constitution of the image photographing apparatus side of Fig. 6 of the second embodiment, is described the different points from the Fig.2 of the first embodiment as follows.
In the image photographing apparatus side 2, lens unit part 25, which is removable equipped on the image photographing apparatus 2 body and motor drive part 26 are newly added, and the motor drive part 26 is controled by the control part 20. As the processing program memorized in the memory part 21, the angle changing program for driving the lens unit part 25 is added.

The lens unit part 25 is a cylindrical casing, where the photographing lens 25i and the charge coupled device (CCD) 25j of the image photographing apparatus 2 is attached inside beforehand, and at the two portions on the right and left outside the casing connected with the image photographing apparatus 2 body side, they have left junction concave portion 25e and right junction concave portion 25f for the lens unit part 25 to rotate toward up and down. Also, at the two portions on the right and left outside the casing, they have upper junction concave portion 25g and lower junction concave portion 25h for the lens unit part 25 to rotate toward right and left.

Also, the lens unit part 25 has left junction axis convex portion 25a, right junction axis convex portion 25b, upper junction axis convex portion 25c, lower junction axis convex portion 25d, each corresponding to these left junction concave portion 25e, right junction concave portion 25f, upper junction concave portion 25g, and lower junction concave portion 25h. These each convex portion is drived (rotated) by the control of the motor drive part 26, and whole the lens unit part 25 rotates with each concave portion connected with each convex portion by rotating of each convex portion.

In case of rotating toward up and down with the lens unit part 25, at two portions of the left junction axis convex portion 25a and right junction axis convex portion 25b, the left junction concave portion 25e and the right junction concave portion 25f of the lens unit part 25 are supported, and the lens unit part 25 is rotated toward up and down by rotating the left junction axis convex portion 25a and right junction axis convex portion 25b. At that time, the junction condition between the upper junction axis convex portion 25c and the upper junction concave portion 25g, the lower junction axis convex portion 25d and the lower junction concave portion 25h are released.

Also, in case of rotating toward right and light for the lens unit part 25, at two portions of the upper junction axis convex portion 25c and the lower junction axis convex portion 25d, the upper junction concave portion 25g and the lower junction concave portion 25h of the lens unit part 25 are supported, and the lens unit part 25 is rotated toward right and light by rotating the upper junction axis convex portion 25c and the lower junction axis convex portion 25d. Also, at that time, the junction condition between the left junction axis convex portion 25a and the left junction concave portion 25e,the right junction axis convex portion 25b and the right junction concave portion 25f are released.

The motor drive part 26 is connected with the bottom portion of the image photographing apparatus 2, and by the angle changing program it controls(rotates) each convex portion connected with each concave portion of the lens unit part 25, and makes capable of the angle changing as to the arbitrary degree of the right and left or up and down concerning the lens unit part 25.
In case of rotating up and down of the the lens unit part 25, the left junction axis convex portion 25a and the right junction axis convex portion 25b is rotated.And in case of rotating right and left, the upper junction axis convex portion 25c and the lower junction concave portion 25d is rotated. rotated.

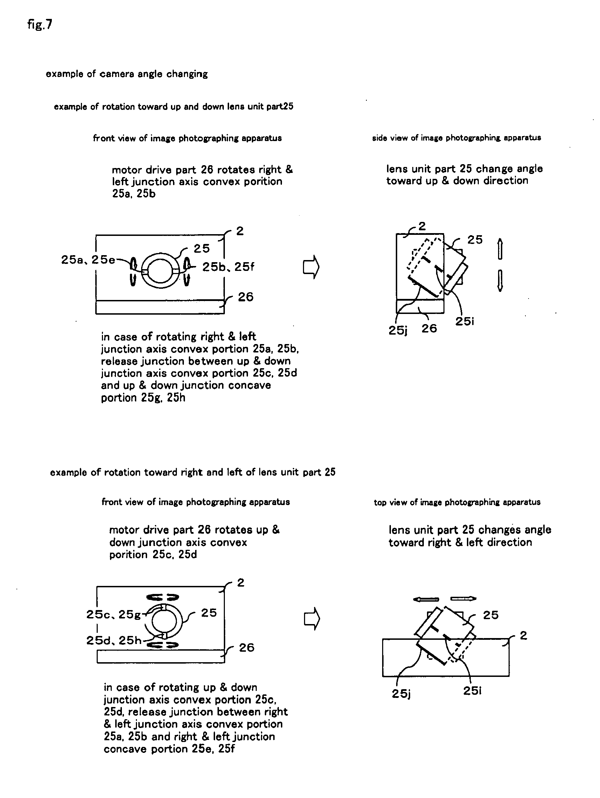

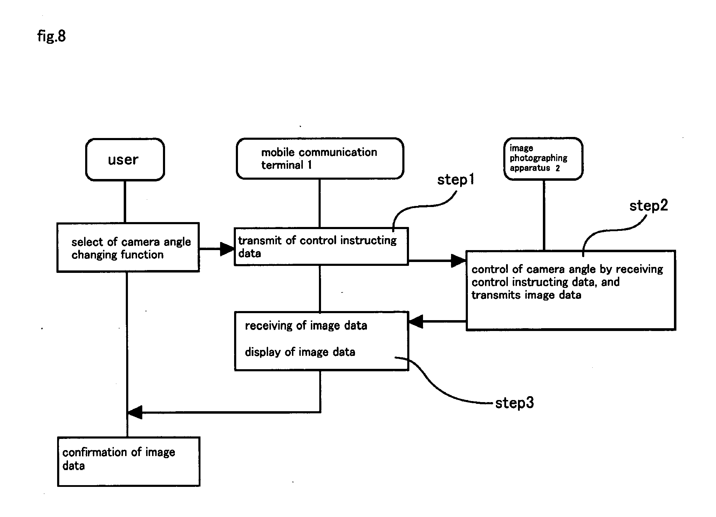

To refer Fig. 7, it is the example og the side view, top view, and front view of the image photographing apparatus 2 against the motor drive part 26, when the camera angle is changed.
The motor drive control program is a program, which receives the control instructing data regarding the camera angle changing from the mobile communication terminal 1, and changes the angle of the lens unit part 25 arbitrarily right and left or up and down on the basis of the control instructing data through the motor drive part 26 receiving the control instructing data concernig the camera angle changing from the mobile communication terminal 1(see Fig.8).

With regard to the function of the control instructing data explained at the first embodiment, the camera angle changing funcion is added in the second embodiment,
the camera angle changing function is displayed in the display part 13 by pushing down the menu button of the operation part 14 when the image data is displayed in the display part 13, and by pushing down the camera angle changing button corresponding the operation part 14, the kinds of the angle changing of right and left or up and down regarding the camera angle changing function is displayed. After selecting the kind of the angle changing,by rotating the direction button with pushing down the direction button, the motor drive part 26 rotates the corresponding convex portion of the lens unit part 25 by the angle of with control in the rotated direction of the direction button, and the each junctioned concave portion corresponding the convex portion and the lens unit portion rotate with the same rotation details.
Also, in case of rotaing right and left during rotaing up and down, the corresponding convex portion is controled and rotated similarly. As the supplimentary data of the control instructing data in this case, the rotation direction and the rotation angle is set.

Next,the flow chart showed in Fig.8 is explained as to the operation of the control system of the image photographing apparatus using the mobile communication terminal of the above-mentioned constitution.
First, the user, confirmig the image data of from the image photographing apparatus 2 displayed in the display part 13 of the the mobile communication terminal 1, selects the camera angle changing function of the mobile communication terminal 1, rotates the direction button while pushing down the direction button,then the mobile communication terminal 1 makes the control instructing data on the basis of the direction button put down (the the supplimentary data set the kind of the camera angle changing and set the rotation direction and rotation angle), and transmits it to the image photographing apparatus (the step 1 in Fig.8: making & transmitting step).

Next, when the image photographing apparatus 2, which received the control instructin data from the mobile communicatio terminal, is set and controled with the camera angle of the motor drive portion 26 at the rotation direction and the rotation angle on the basis of the control kinds of the control instructing data and the supplimentary data(receiving and control step), the motor drive portion 26 rotates the two corresponding convex portions of the lens unit part 25(in case of rotating up and down, the left junction axis convex portion 25a and right juction axis convex 25b, in case of rotating right and left, the upper juction axis convex 25c and the lower juction axis convex 25d), toward the rotation direction and the rotation angle.The lens unit part 25, which is supported by the two portion of the corresponding convex portion of the lens unit portion 25 rotates with the same details .Also, the image data from the image photographing appatus 2 immediately after the control in rotating is transmitted to the mobile communication terminal 1 on a real-time basis (the step 2 in Fig.8).

Then, the mobile communication terminal 1, which received the image data from the image photographing apparatus 2, displays the image data in the display part 13 (the step 3 in Fig. 8 : display step after control).
The mobile communication terminal 1, even during the rotation control of the motor drive portion 26, receives the image data from the image photographing apparatus 2, and displays the image data in the display part 13 of the mobile communication terminal.

Thus, according to the second embodiment of the present invention, the user of the image photographing apparatus 2 can change the camera angle of the image photographing apparatus 2, with confirming the image data.

As described in detail above cocerning the embodiment of the present invention referring to figures, concrete constitution is not to be limited to these embodiments, and contains those embodiments, and contains such embodiment which has the change of the design and so forth, within the extent of the main points, which dose not deviate from it.
For instance, the above embodiments are described such example, where a mobile communication terminal and a image photographing apparatus through wireless communications or optical communications are connected, not to be limitted to this but may be connected plural mobile communications and with a image photographing apparatus.
Further, in case where there is no obstacle between the image phtographing apparatus 2 and the mobile communication terminal 1, and the user utilizes tripod by setting at the nearest place, as for the shuttering function and the flashing function,optical communications may be used. Also, the above embodiments may be diverted mutual technology, so far as the purpose and the constitution has no contradiction or problem.

Fig.1 is a schematic diagram showing the constitution of the control system of the image photographing apparatus 2 using the mobile communication terminal 1.
Fig.2 is a block diagram showing the constitution of the mobile communication terminal 1 and the image photographing apparatus 2.
Fig.3 is an example of the image data of zooming-in and zooming-out shown in the display part 13 of the mobile communication terminal 1.
Fig.4 is an example of the image size change shown in the display part 13 of the mobile communication terminal 1.
Fig.5 is a flow chart of the operation of the control system of the image photographing apparatus 2 using the mobile communication terminal 1.
Fig.6 is a block diagram as a second embodimet showing the constitution of the image photographing apparatus 2 side of the image photographing apparatus 2 using the mobile communication terminal 1.
Fig.7 is an example of a front view, a side view, a top view of the of the image photographing apparatus 2, in case where the motor drive portion 26 of the system is used and the camera angle is changed.
Fig.8 is a flow chart of the operation of the control system of the image photographing apparatus 2 concerning the selection of the angle changing function using the mobile communication terminal 1.

### [Explanation of the Referece Numbers]

- 1: mobile communication terminal
- 2: image photographing apparatus
- 3: wireless communications or optical communications
- 10,20,40: cotrol part
- 11,21,41: memory part
- 12,22,42: communication part
- 13,23: display part
- 14,24: operation part
- 25: lens unit part
- 25a: left junction axis convex portion
- 25b: right junction axis convex portion
- 25c: upper junction axis convex portion
- 25d: lower junction axis convex portion
- 25e: left junction concave portion
- 25f: right junction concave portion
- 25g: upper junction concave portion
- 25h: lower junction concave portion
- 25i: lens for photographing
- 25j: charge coupled device(CCD)
- 26: motor drive portion

## Claims

1. A control system of image photographing apparatus, as digital camera, digital video camera or the like, using a mobile communication terminal wherein
the control system connects the mobile communication terminal and the image photographing apparatus, as digital camera, digital video camera or the like through wireless communications or optical communications
and controls the various functions of the image photographing apparatus, as digital camera, digital video camera or the like, based on the control instructing data regarding operations of the mobile communication terminal.

2. The control system according to claim 1 wherein
the mobile communication terminal has display part and displays the image data of the photographic subject displayed in the finder of the image photographing apparatus, as digital camera, digital video camera or the like.

3. The control system according to claim 1 or 2 **characterized** wherein
the software of the mobile communication terminal for controlling the various functions can be installed through the Internet.

4. The control system according to claim 3 **characterized** wherein
the installation can be removed with the software previously equipped regarding the operation method of the camera in the mobile communication terminal.

5. The control system according to one of claims 1 through 4 wherein
the various function(s) has/have more than one of any functions among shuttering function, zooming function, picture size changing function, and monitoring function.

6. The control system according to any one of claims 1 through 5 wherein
the various function(s) has/have angle changing function regarding the image photographing apparatus, as the digital camera,digital video camera or the like.

7. The image photographing apparatus, as digital camera, digital video camera or the like wherein
the mobile communication terminal is connected through wireless communications or optical communications and various functions are controlled on the basis of controll instructing data regarding the operation of the mobile communication terminal.

8. The image photographing apparatus according to claim 7 wherein
the mobile communication terminal has display part,and displays in the display part the image data of the photographic subject displayed in the finder.

9. The image photographing apparatus according to claim 7 or 8 wherein
the various fuction(s) has/have more than one of any functions among shuttering function, zooming function, picture size changing function, and monitoring function.

10. The image photographing apparatus according to one of claims 7 through 9 wherein
the various function (s) has/have angle changing function.

11. The control method of controlling various functions for image photographing apparatus, as the digital camera, digital video camera or the like on the basis of control instructing data regarding the operation of the mobile communication terminal, whereby the mobile communication terminal is connected with image photographing apparatus, as digital camera, digital video camera or the like through wireless communications or optical communications **characterized in that**, the control method has,
display step which displays in the display part the image data of photographic subject from the image photographing apparatus, as digital camera, digital video camera or the like,
making and transmitting steps which makes the control instructing data and transmits to the image photographing apparatus, as digital camera, digital video camera or the like,
receiving and control steps of the various functions on the basis of the control instructing data which receives the control instructing data transmitted from the making and transmitting steps,
display step after control which displays in the display part the image data immediately after control at the receiving and control steps.

12. The control system according to claim 11 wherein
the control instructing data has more than one of any functions among shuttering function, zooming function, image size changing function, monitoring function, and angle changing function.

13. The control program wherein
the control method according to claim 11 or 12 is performed by computer.
